# EUROPEAN PATENT SPECIFICATION

(11) **EP 2 520 416 B1**
(45) Date of publication and mention of the grant of the patent: **25.12.2013**
(21) Application number: 11165020.6
(22) Date of filing: 05.05.2011
(51) Int. Cl.: B29C 65/02, B65B 51/22, H05B 6/10, B29C 65/50, B65B 51/30

(54) **Induction sealing device for heat sealing packaging material for producing sealed packages of pourable food products**
Induktionsversiegelungsvorrichtung für Wärmeversiegelungsverpackungsmaterial zur Herstellung versiegelter Verpackungen für gießbare Lebensmittel
Dispositif de scellement par induction pour matériau de conditionnement thermoscellable pour produire des emballages scellés de produits alimentaires pouvant être versés

(43) Date of publication of application: 07.11.2012
(73) Proprietor: Tetra Laval Holdings & Finance S.A., 1009 Pully (CH)
(72) Inventor: Sighinolfi, Fabrizio, 41015 Nonantola (IT); Babini, Andrea, 41124 Modena (IT); Monari, Pietro, 41122 Modena (IT)
(74) Representative: Di Sciuva, Michele

(56) References cited:
- EP-A1- 2 143 643
- US-A- 6 078 033

## Description

The present invention relates to an induction sealing device for heat sealing packaging material for producing sealed packages of pourable food products.

As is known, many food products, such as fruit juice, pasteurized or UHT (ultra-high-temperature treated) milk, wine, tomato sauce, etc., are sold in packages made of sterilized packaging material.

A typical example of this type of package is the parallelepiped-shaped package for liquid or pourable food products known as Tetra Brik Aseptic (registered trademark), which is made by folding and sealing laminated strip packaging material.

The packaging material has a multilayer structure substantially comprising a base layer for stiffness and strength, which may be defined by a layer of fibrous material, e.g. paper, or mineral-filled polypropylene material; and a number of layers of heat-seal plastic material, e.g. polyethylene film, covering both sides of the base layer.

In the case of aseptic packages for long-storage products, such as UHT milk, the packaging material also comprises a layer of gas- and light-barrier material, e.g. aluminium foil or ethyl vinyl alcohol (EVOH) film, which is superimposed on a layer of heat-seal plastic material, and is in turn covered with another layer of heat-seal plastic material forming the inner face of the package eventually contacting the food product.

As is known, packages of this sort are produced on fully automatic packaging machines, on which the tube is formed continuously from the web-fed packaging material. More specifically, the web of packaging material is unwound off a reel and fed through a station for applying a sealing strip of heat-seal plastic material, and through an aseptic chamber on the packaging machine, where it is sterilized, e.g. by applying a sterilizing agent such as hydrogen peroxide, which is subsequently evaporated by heating, and/or by subjecting the packaging material to radiation of appropriate wavelength and intensity.

The web of packaging material is then fed through a number of forming assemblies which interact with the packaging material to fold it gradually from strip form in a tube shape.

More specifically, a first portion of the sealing strip is applied to a first longitudinal edge of the packaging material, on the face of the material eventually forming the inside of the packages; and a second portion of the sealing strip projects from the first longitudinal edge.

The forming assemblies are arranged in succession, and comprise respective roller folding members defining a number of compulsory packaging material passages varying gradually in section from a C shape to a substantially circular shape.

On interacting with the folding members, the second longitudinal edge is laid on the outside of the first longitudinal edge with respect to the axis of the tube being formed. More specifically, the sealing strip is located entirely inside the tube, and the face of the second longitudinal edge facing the axis of the tube is superimposed partly on the second portion of the sealing strip, and partly on the face of the first longitudinal edge located on the opposite side to the first portion of the sealing strip.

Packaging machines of the above type are known in which the first and second longitudinal edge are heat sealed to form a longitudinal seal along the tube, which is then filled with the sterilized or pasteurized food product, and is sealed and cut along equally spaced cross sections to form pillow packs, which are then folded mechanically to form respective parallelepiped-shaped packages.

More specifically, the heat-seal operation comprises a first heating step to heat the second longitudinal edge without the sealing strip; and a second pressure step to compress the sealing strip and the longitudinal edges.

The first heating step melts the polyethylene layer of the second longitudinal edge, which transmits heat by conduction to the first longitudinal edge and the sealing strip, so as to melt the polyethylene layer of the first longitudinal edge and the heat-seal material of the sealing strip.

At the second pressure step, the tube is fed between a number of first rollers outside the tube, and at least one second roller inside the tube.

More specifically, the first rollers define a compulsory circular passage for the tube of packaging material, and have respective axes in a plane transversal to the path of the tube.

In the case of barrier material comprising a sheet of electrically conductive material, e.g. aluminum, the longitudinal seal may be formed by induction heat-sealing.

More specifically, the packaging machine comprises a sealing device which is wholly arranged outside the tube.

The sealing device substantially comprises one or more inductive elements electrically fed by a high-frequency alternate current generator.

In use, the alternate current flowing inside the inductive elements generates an alternate magnetic field flux which extends substantially transversal to the feeding direction of the tube.

This alternate magnetic field flux generates eddy currents in the aluminium layer to melt the heat-seal plastic material locally.

Sealing device is mounted above and is connected with the first rollers.

A need is felt within the industry to render the overall quality of the longitudinal seal as little as possible dependent on the fluctuation of the packaging materials in a direction transversal to the feeding tube direction. therefore, of the longitudinal sealing, especially at the start-up of the packaging machine and/or when the longitudinal seal is performed in a region of the packaging material at which a new reel has been joined to an existing one.

In particular, the known inductive elements comprise a first and second leg within which alternate current flows in opposite directions.

The first leg is arranged in front of the sealing area defined by the overlapping regions of the first and second longitudinal edges and of the sealing strip whereas the second leg is spaced from such a sealing area.

Accordingly, only the first leg induces eddy currents within the sealing area whereas the second portion induces eddy current in a region of the packaging material which is spaced and far from the overlapping edges.

As a result, only the eddy currents generated by the first leg are effective in forming the longitudinal seal.

When a new reel of packaging material is joined to an existing one, the margins of respective aluminum layers are interrupted. In this case, there is the risk that the area close to the margins is not heated and, therefore, not completely sealed, by the known sealing device. In particular, the Applicant has found that eddy current tends to close far from the margins of the aluminum layers, so causing the incomplete sealing of the margins.

Moreover, the Applicant has found that eddy currents tend to create a cold spot within the sealing area and a hot spot outside the sealing area, so that the longitudinal scaling could be not perfect.

A need is also felt within the industry to obtain a heat pattern as uniform as possible in the sealing area.

US 6,078,033 and EP-A- 2143643 disclose a heating induction sealing device according to the preamble of claim 1.

It is an object of the present invention to provide an induction sealing device, designed to meet at least one of the above requirement in a straightforward,
Figures 4 and 5 show respective additional steps of the operation of the sealing device of Figure 1;
Figure 6 shows the heat sealing device of Figures 1 to 5, when disassembled;
Figure 7 shows a first side of some components of the sealing device of Figures 1 to 6, when disassembled;
Figure 8 shows a second side, opposite to first side, of the components of Figures 1 to 6, when disassembled;
Figures 9 and 10 show schematically electrical circuits of the sealing device of Figures 1 to 8 in respective different configurations;
Figures 11 and 12 are section along lines XI-XI and XII-XII respectively of Figure 8 and show constant magnetic field lines generated by the sealing device according to the present invention;
Figure 13 shows some components of the packaging machine of Figures 1 and 2; and
Figures 14 and 15 show the patterns of inducing and eddy currents in a known prior art inductive element and in an inductive element according to the invention respectively.

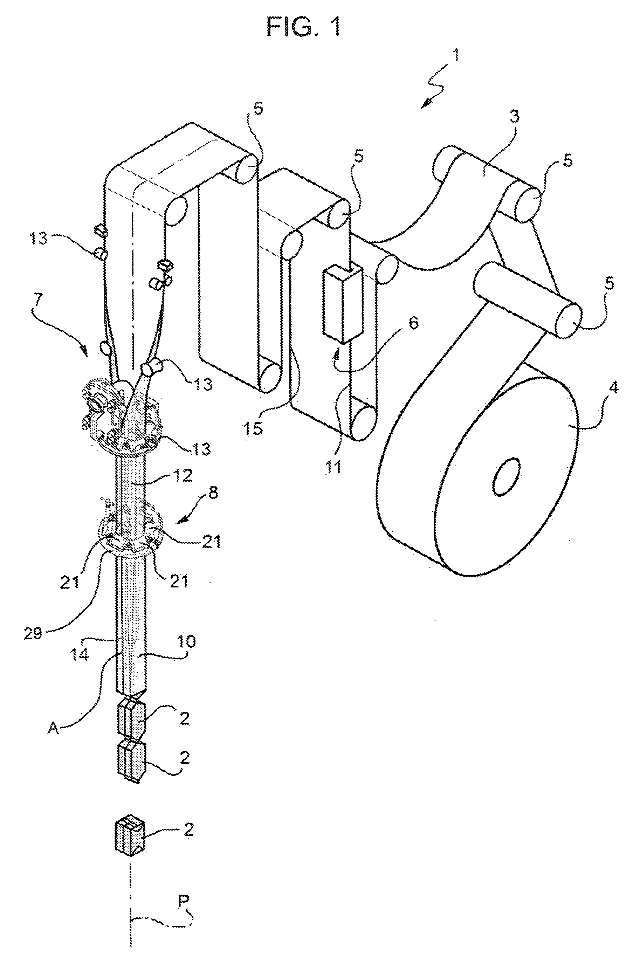

Number 1 in Figure 1 indicates as a whole a packaging machine for continuously producing sealed packages 2 of a food product from a web 3 of packaging material, which is unwound off a reel 4 and fed along a forming path P.

Machine 1 preferably produces sealed packages 2 of a pourable food product, such as pasteurized or UHT milk, fruit juice, wine, peas, beans, etc.

Machine 1 may also produce sealed packages 2 of a food product that is pourable when producing packages 2, and sets after packages 2 are sealed. One example of such a food product is a portion of cheese, that is melted when producing packages 2, and sets after packages 2 are sealed.

The packaging material has a multilayer structure substantially comprising a base layer for stiffness and strength, which may be defined by a layer of fibrous material, e.g. paper, or mineral-filled polypropylene material; and a number of layers of heat-seal plastic material, e.g. polyethylene film, covering both sides of the base layer.

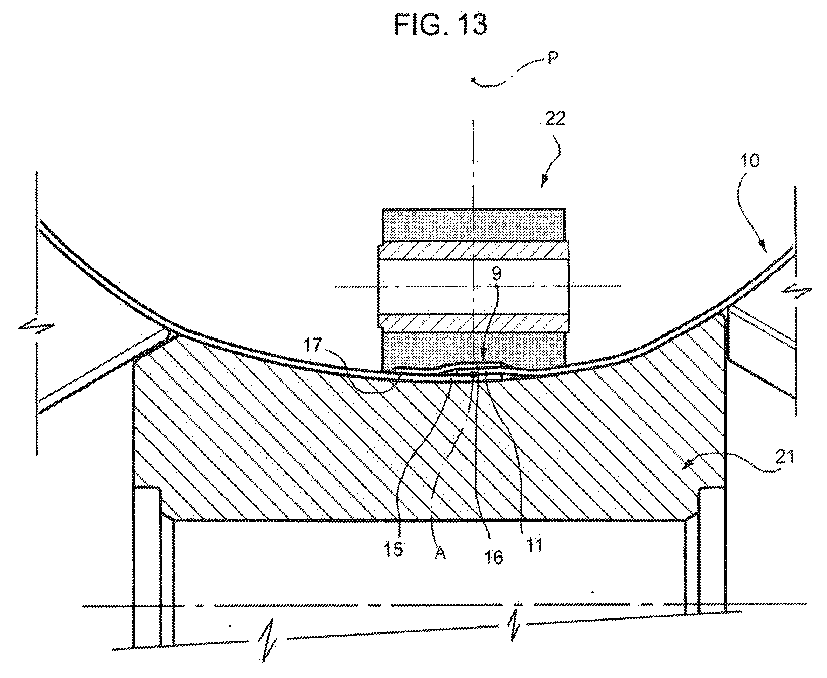

More specifically, web 3 is fed along path P by guide members 5, e.g. rollers or similar, and successively through a number of work stations, of which are shown schematically: a station 6 for applying a sealing strip 9 (shown enlarged in thickness in Figure 13 for the sake of clarity) to web 3; a forming station 7 for forming a tube 10 of packaging material; and a heat-sealing station 8 for forming a longitudinal seal 14 along tube 10. Seal 14 is continuous and extends along a direction A parallel to path P.

Machine 1 also comprises a fill device 12 for pouring the sterilized or sterile-processed food product continuously into tube 10 of packaging material; and a jaw-type forming assembly (not shown) for gripping, sealing, and cutting tube 10 along equally spaced cross sections to form a succession of packages 2.

More specifically, at station 6, a longitudinal edge 11, parallel to path P, of web 3 is first heated, e.g. by heat induction, to melt the plastic layer. Web 3 has a longitudinal edge 15 opposite edge 11 and also parallel to path P.

Next, a portion 16 (Figure 13) of strip 9 is first applied to the face of edge 11 eventually facing inwards of packages 2, while a further portion 17 of strip 9 projects from edge 11.

Finally, strip 9 is pressed onto longitudinal edge 11, e.g. by means of rollers not shown.

More specifically, sealing strip 9 is made of heat-seal plastic material.

Strip 9 prevents edge 11 from absorbing the food product once tube 10 and seal 14 of the tube are formed, and also provides for improving the gas-barrier performance and physical strength of seal 14.

Station 7 comprises a number of forming assemblies 13 arranged successively along path P, and which interact gradually with web 3 to fold it into the form of tube 10.

More specifically, forming assemblies 13 comprise respective numbers of rollers defining respective compulsory packaging material passages, the respective sections of which vary gradually from a C shape to a substantially circular shape.

More specifically, the axes of the rollers in each forming assembly 13 lie in a relative plane transversal, perpendicular in the embodiment shown, to path P.

Forming assemblies 13 gradually form tube 10, so that edge 15 is located outwards of edge 11 with respect to the axis of tube 10. More specifically, when forming tube 10, strip 9 is located inside tube 10, and the inner face of edge 15 is superimposed partly on portion 17 of strip 9, and partly on the outer face of edge 11 (Figure 13).

Station 8 comprises a heating induction sealing device 30 for heating edge 15 and locally melting the polyethylene layer of edge 15. Heat is transmitted by conduction from edge 15 to edge 11 and strip 9, so as to locally melt the polyethylene layer of edge 11 and the heat-seal material of strip 9.

Station 8 also comprises a number of forming rollers 21 defining a compulsory circular passage for tube 10; and one or more rollers 22 for pressing portion 17 of strip 9, and portion 16 of strip 9 and edge 11 onto the face of edge 15 inside tube 10, so that the polyethylene layers of edges 11, 15 and the heat-seal material of strip 9 blend completely to form the molecular bonds defining seal 14 of tube 10.

More specifically, rollers 21 are located outside tube 10, and pressure rollers 22 inside tube 10.

Station 8 also comprises an annular support 29 which surrounds tube 10 and support rollers 21.

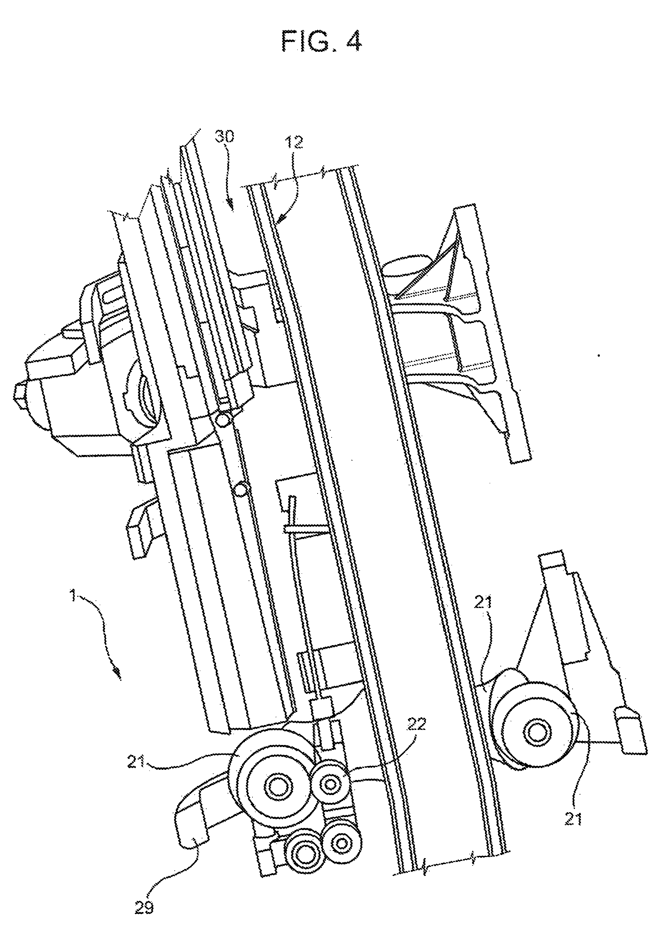

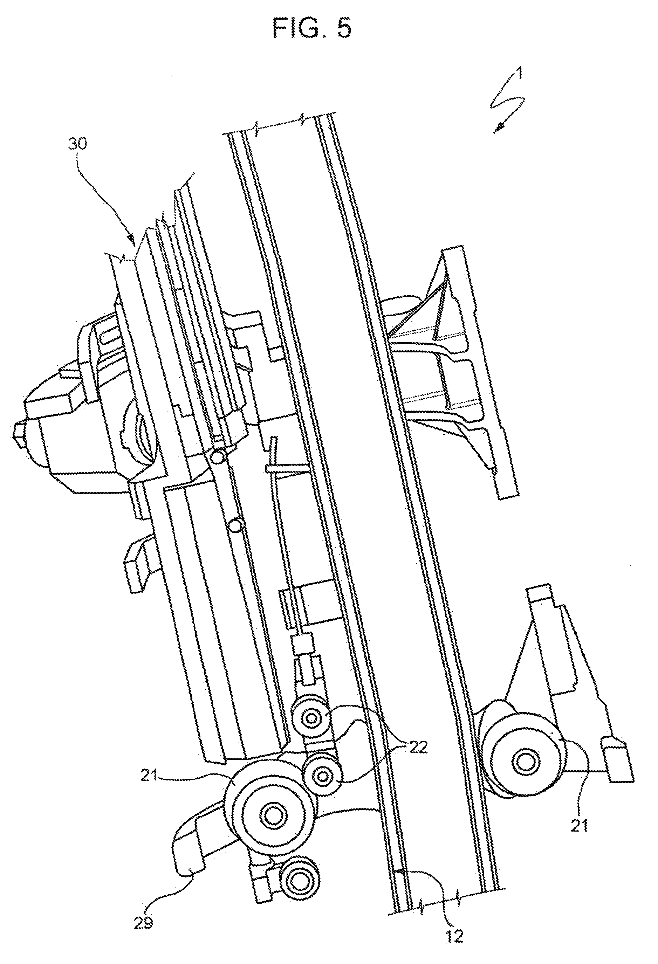

Sealing device 30 is, in particular, movable together with support 29 (Figures 4 and 5) between a raised position and lowered position along a direction which is parallel to path P shown respectively in Figures 4 and 5.

Advantageously, sealing device 30 comprises a pair of inductors 31, 32; inductor 31 comprises a portion 35 facing inductor 32 and defining with inductor 32 a passage 28 for edge 15, and a portion 36; sealing device 30 is selectively arrangeable in a first configuration, in which alternate currents flow within inductors 31, 32; portion 35 of inductor 31 and inductor 32 are configured to generate a magnetic flux M1 transversally to direction A, when sealing device is arranged in the first configuration; portion 36 of inductor 31 is configured to generate a magnetic flux M2 having a main component transversal to path P, when sealing device 30 is arranged in the first configuration.

Sealing device 30 may be also selectively arranged in a second configuration, in which alternate current flows within portion 36 of inductor 31 only and no alternate current flows within inductor 32 and portion 35 of inductor 31.

When sealing device 30 is arranged in the second configuration, magnetic flux M1 is not generated and portion 36 generates only magnetic flux M2.

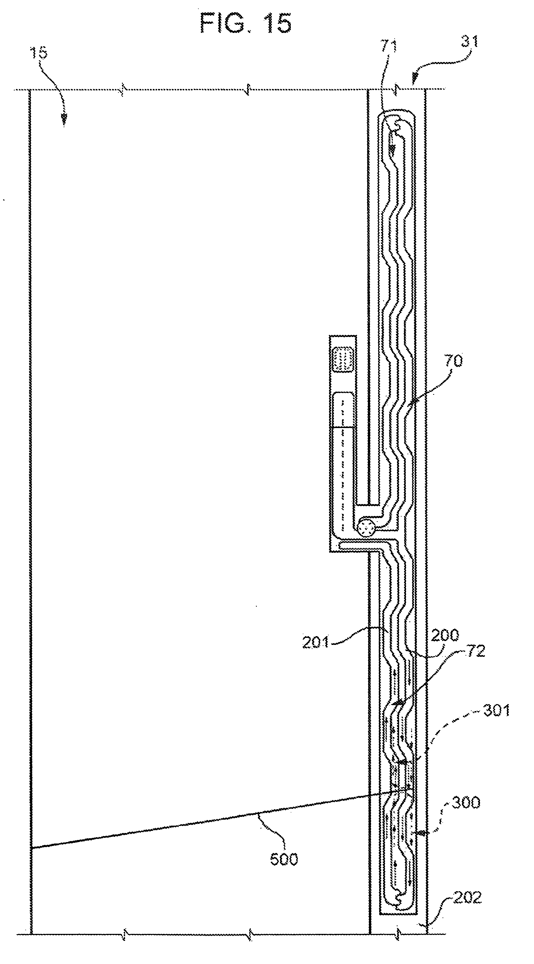

Portion 36 of inductor 31 comprises legs 200, 201 within which alternate current flows, in use, in opposite direction; leg 200 is configured to induce, in use, a portion 300 of eddy current (shown with a dashed line in Figure 15) within an area 202 of edge 15 to be sealed onto strip 9 and edge 11.

Leg 201 is configured to induce a portion 301 of eddy current within area 202 of edge 15 to be sealed onto strip 9 and edge 11.

In this way, both legs 200, 201 of portion 36 of inductor 31 are effective in inducing respective portions 300, 301 of eddy current within area 202.

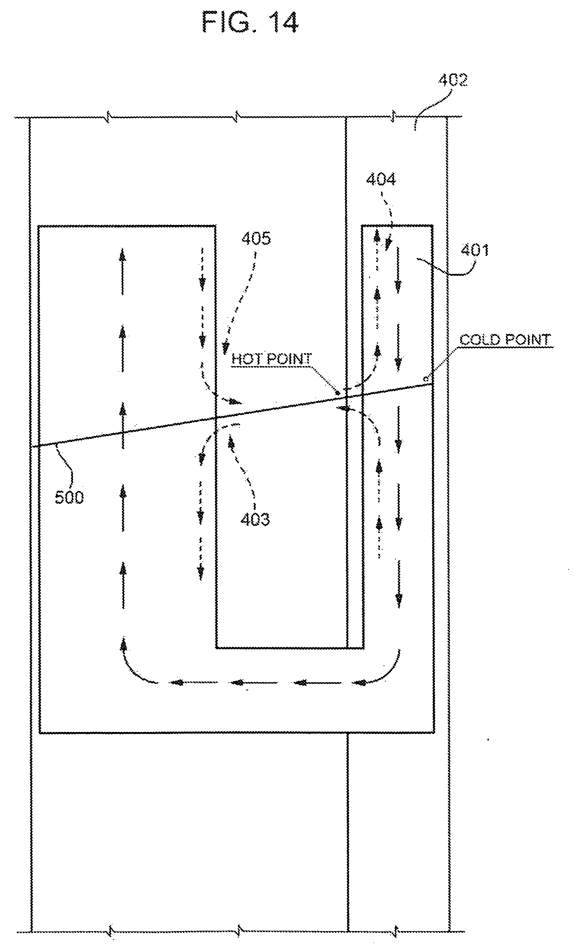

In other words, substantially the whole eddy current induced by portion 36 of inductor 31 circulate within area 202 and close to the margin layers 500 at which a new reel of packaging material has been joined to an existing one (Figure 15), instead of circulating at a certain distance from the margin layers, as in the prior art cited in the introductory part of the present description (Figure 14).

In this way, the formation of a cold area between legs 200, 201 is substantially prevented, and seal 14 is formed as continuous along a direction C orthogonal to direction B.

On the contrary, only a part 401 (Figure 14) of the prior art inductors cited in the introductory part of the present description is effective in inducing a portion 404 of eddy current 403 (shown with a dashed line in Figure 14) within an area 402 to be sealed of the packaging material. The remaining part of prior art inductors generates a portion 405 of eddy current 403, which fails to flow within area 202.

As a result, eddy current 403 tends to close far from area 402 to be sealed in the prior art solution.

Furthermore, legs 200, 201 have a length along a direction B parallel to direction A and are nonsymmetrical relative to direction B.

Legs 200, 201 face each other along a direction C, which is orthogonal to direction B and to direction A.

Portions 35, 36 define respectively the top and the bottom of relative inductor 31.

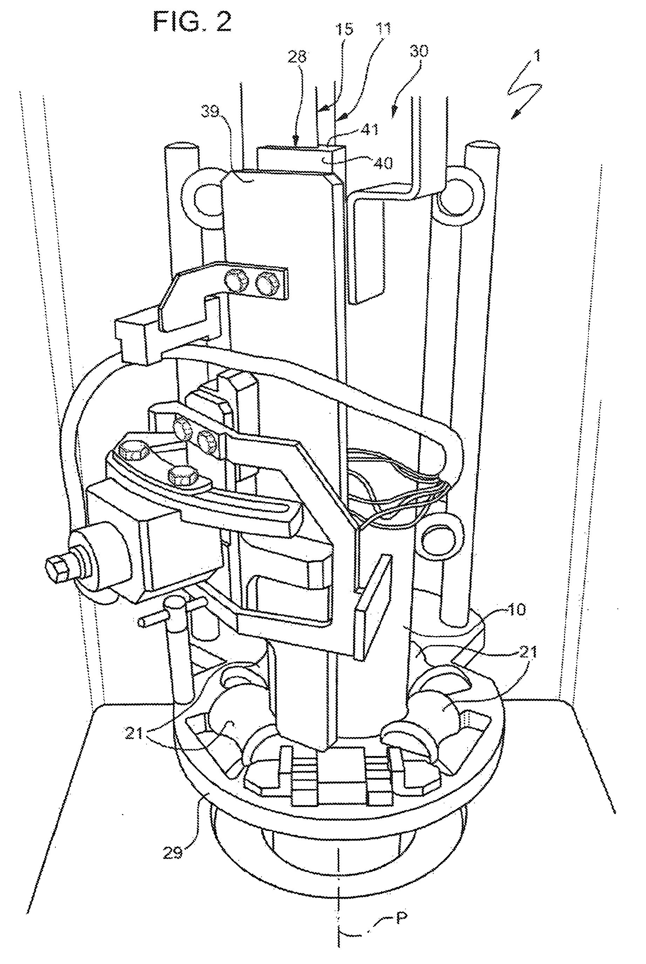

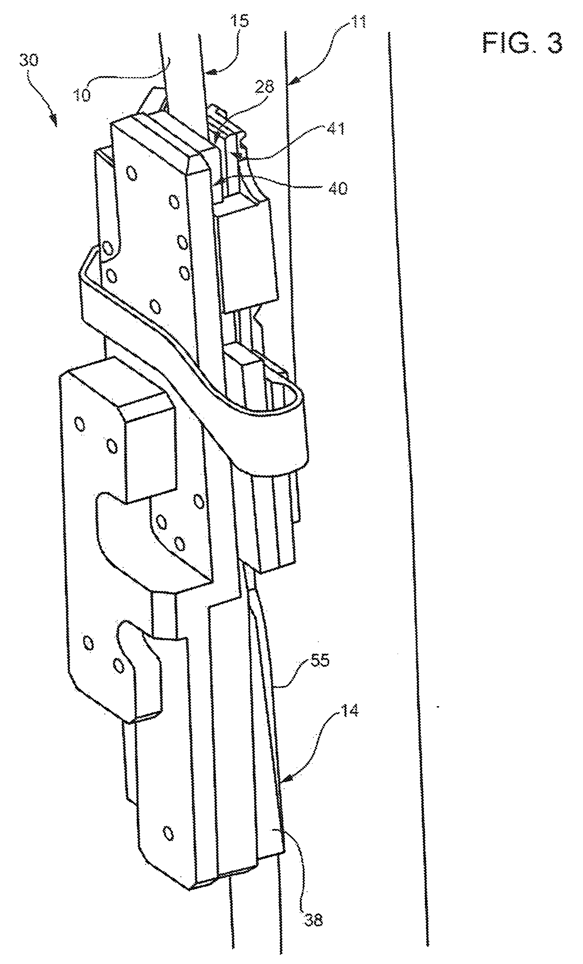

In detail, when edge 15 enters passage 28, it is still detached from edge 11 and strip 9 (see Figures 2 and 3 in which strip 9 is not shown).

Edge 15 overlaps edge 11 and strip 9 as it is fed in front of portion 36 of inductor 31.

Sealing device 30 substantially comprises (Figures 2, 3 and 6 to 8):
- a body 40 arranged outside tube 10; and
- a body 41 arranged on the inner side of tube 10.

Body 40, 41 are releasably connected to each other, in the embodiment shown through a plurality of screws.

Bodies 40, 41 extend along relative axes B parallel to direction A and define therebetween passage 28.

Body 40 is also connected to a plate 39 which is, in turn, fixed to support 29 (Figure 2).

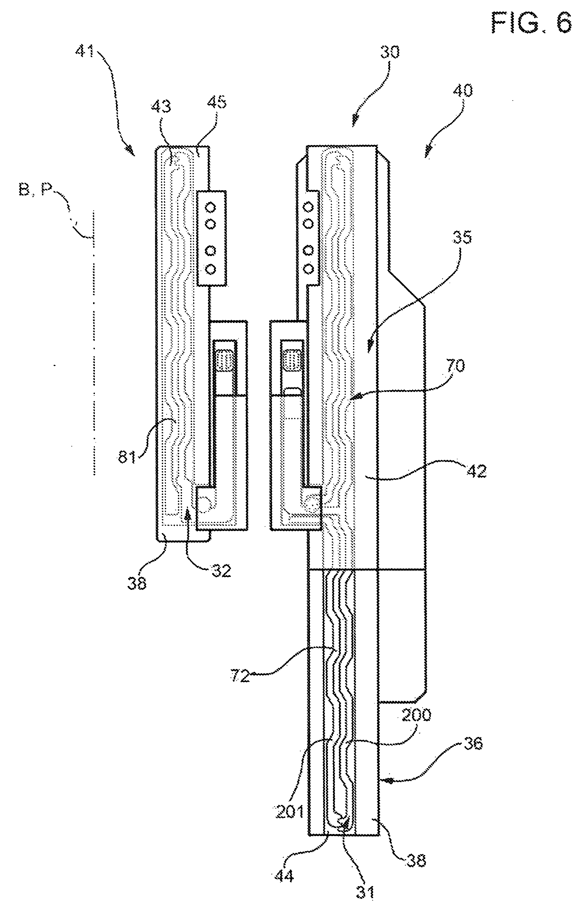

In detail, each body 40, 41 comprises (Figure 6):
- a plastic housing 42, 43;
- an insert 38 of flux concentrating material, for example ferrite; and
- a pair of support 44, 45 for supporting relative inductors 31, 32.

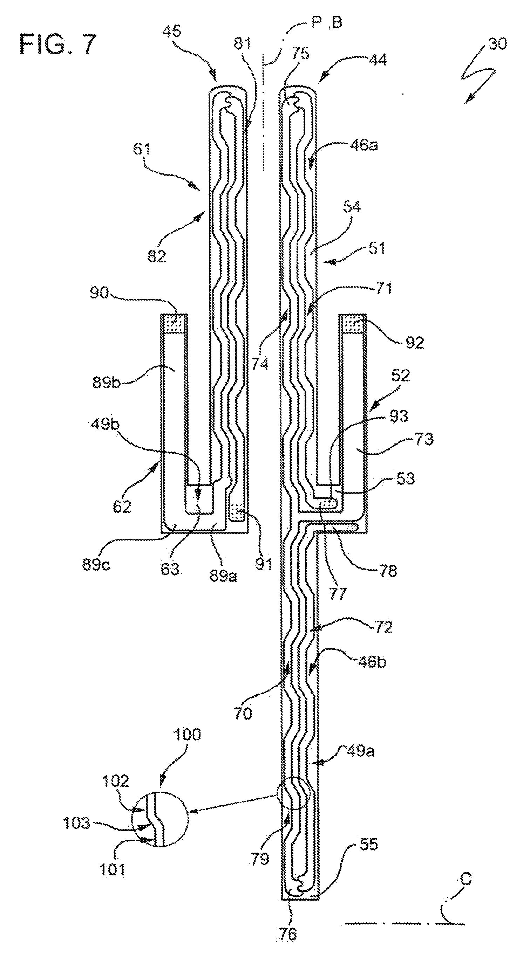

Support 44 comprises (Figure 7):
- a top part 46a sandwiched between housing 42 and top part of relative insert 38; and
- a bottom part 46b cooperating, on one side, with a bottom part of relative insert 38.

Support 45 is sandwiched between housing 43 and relative insert 38.

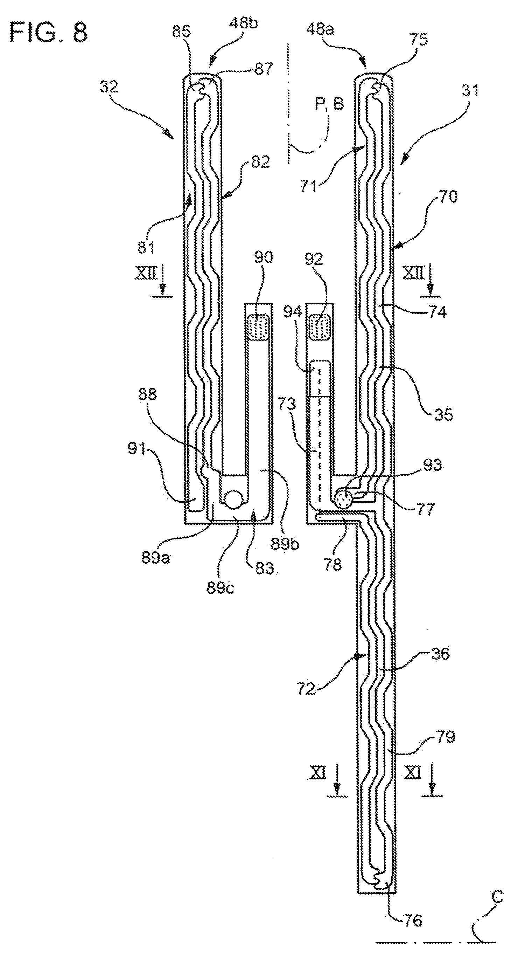

Supports 44; 45 also comprise a pair of faces 48a, 48b; 49a, 49b opposite to each other (Figures 7 and 8).

Faces 48a, 48b are arranged towards the packaging material of tube 10 and have respective upper parts which cooperate with plastic housing 42, 43 (Figure 8).

Faces 49a, 49b are arranged towards insert 38 (Figure 7).

Support 44 substantially comprises (Figure 7):
- a main arm 51 parallel to axis B;
- an arm 52 parallel to arm 51 and axis B, and spaced from arm 51 transversally to relative axis B; and
- a crossbar 53 orthogonal to relative axis B and which extends between arms 51, 52.

Crossbar 53 extends from the middle of arm 51 towards a bottom end of arm 52.

In detail, arm 52 extends upwardly from crossbar 53 and for a length which is less than the half of the length of arm 51 measured along axis B.

Support 45 substantially comprises:
- a main arm 61 parallel to axis B;
- an arm 62 parallel to arm 61 and axis B, and spaced from arm 61 transversally to axis B; and
- a crossbar 63 orthogonal to axis B and which extends between respective arms 61, 62.

Arm 62 protrudes from crossbar 63 on the opposite of arm 61.

In detail, arm 62 extends upwardly from crossbar 63 and for a length which is less than the half of the length of arms 51, 61 measured along axis B.

The length of crossbars 53, 63 measured orthogonally to axis B is substantially identical.

The length of arm 52, 62 measured parallel to axis B is identical.

Furthermore, inductors 31, 32 of each pair are embedded between two insulating layers.

Inductor 31 comprises (Figures 7 and 8):
- a serpentine 70 having a pair of opposite ends 75, 76;
- a pair of serpentines 71, 72 starting from ends 75, 76 respectively and having respective end portion 77, 78 opposite to ends 75, 76; and
- a L-shaped portion 73 starting from the middle of serpentine 70.

In detail, a top half 74 of serpentine 70 and serpentine 71 are arranged in top half 54 of arm 51 and form portion 35 of inductor 31.

A bottom half 79 of serpentine 70 and serpentine 72 are arranged in bottom half 55 of arm 51 and form portion 36 of inductor 31.

L-shaped portion 73 is arranged inside crossbar 53 and arm 52 of support 44.

Portion 77, 78 are parallel to each other and are arranged inside crossbar 53.

Bottom half 55 of arm 51 is sloped relative to top half 54 of such arm 51 (Figure 3).

Inductor 32 comprises (Figure 8):
- a serpentine 81 having an end 85; and
- a serpentine 82 which has an end 87 electrically connected to end 85 of serpentine 81 and an end 88 opposite to end 87; and
- a U-shaped portion 83 starting from end 88.

Serpentines 81, 82 are housed within arm 61.

U-shaped portion 83 substantially comprises:
- a stretch 89a parallel to axis B and originating from end 88;
- a stretch 89b parallel to stretch 89a and, therefore, parallel to axis B; and
- a stretch 89c interposed between stretches 89a, 89b and orthogonal to axis B.

Stretches 89a, 89b, 89c are respectively housed inside arm 61, 62 and crossbar 63.

Each serpentine 70, 71, 81, 82 has a length along axis B of relative body 40, 41 and extends, along its length, at varying distances from axis B of relative body 40,41.

Each serpentine 70, 71, 81, 82 comprises a plurality of repeated modules 100 identical and adjacent to each other.

Each module 100 substantially comprises (Figure 7):
- a rectilinear stretch 101 parallel to relative axis B and extending at a first distance from relative axis B;
- a rectilinear stretch 102 parallel to axis B and extending at a second distance, different from the first distance, from relative axis B; and
- a curved stretch 103 interposed between stretches 101, 102.

When sealing device 30 is assembled, arms 52, 62; top half 54 of arm 51 and arm 61; and crossbars 53, 63 face each other from opposite sides of passage 28 along relative direction C. In the same way, serpentine 71, 82; top half 74 of serpentine 70 and serpentine 81; and L- and U-shaped portions 73, 83 face each other from opposite sides of passage 28 along relative direction C.

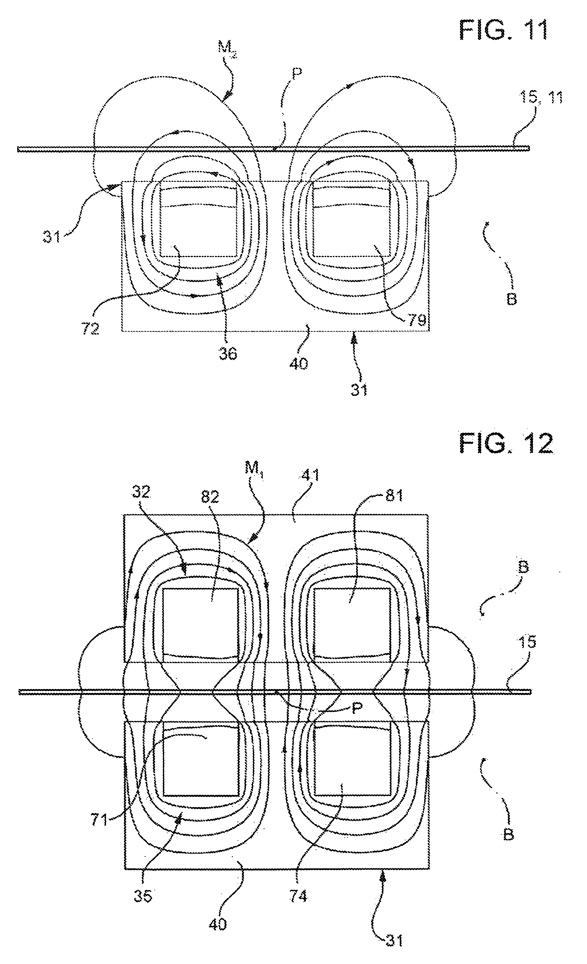

Top half 74 of serpentine 70 and serpentine 81 are arranged on the same side (right side in Figure 12) of serpentines 71, 82 respectively.

Homologous points of top (bottom) half 74 (79) of serpentine 70 and serpentine 71 (72) are arranged at constant distance measured along relative direction C from each other.

In the same way, homologous point of serpentines 81, 82 are arranged at a first constant distance measured along relative direction C from each other.

Stretches 101 of leg 200 (201) are arranged at a second distance measured along direction C from stretches 102 of the same leg 200 (201).

The value of this second distance is less than or equal to the first constant distance between legs 200, 201.

As a result, stretches 101 of leg 200 are interposed between stretches 102 of leg 201 parallel to direction B and are aligned with or even arranged on the opposite side of stretches 102 of leg 201 along direction C with respect to stretches 102 of leg 200.

With reference to Figures 7 and 8, inductor 32 comprises:
- an electric contact 90 defined by an end of stretch 89b which is opposite to stretch 89c; and
- an electric contact 91 defined by an end of serpentine 81 opposite to end 85.

Inductor 31 comprises:
- an electric contact 92 defined by an end of L-shaped portion 73 opposite to serpentine 70;
- an electric contact 93 defined by a free end of portion 77; and
- an electric contact 94 electrically connected (as schematically indicated by the dashed line in Figure 8) to a free end of portion 78.

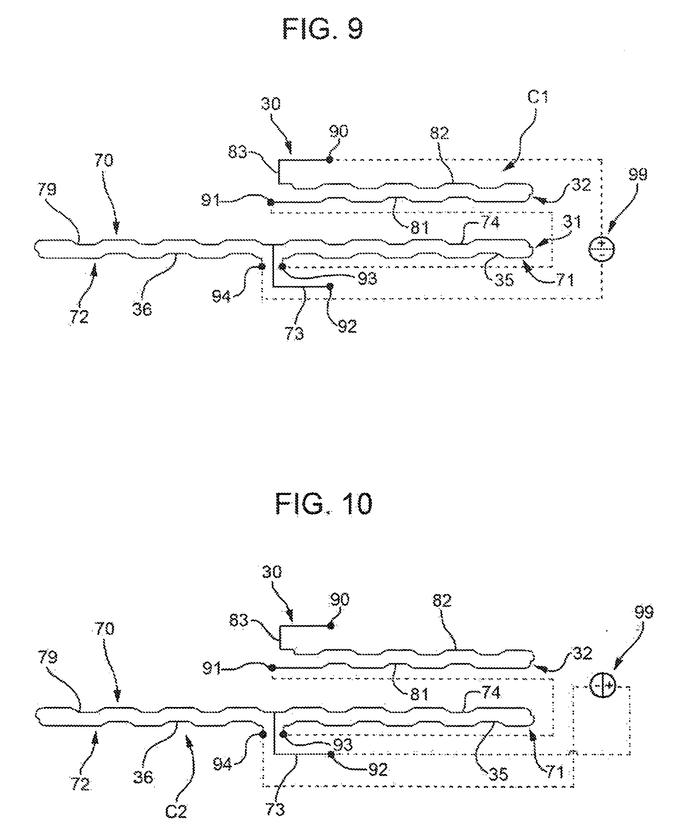

Electric contacts 91, 93 are electrically connected to each other by using a conductive element (only schematically shown in Figures 9 and 10), when sealing device 30 is arranged both in the first and in the second configuration.

Electric contact 94 is electrically connected to a negative pole of a power/current generator 99, when sealing device 30 is arranged both in the first and in the second configuration (Figures 9 and 10).

Electric contact 90 is electrically connected to a positive pole of the power/current generator 99, when sealing device 30 is arranged in the first configuration (Figure 9). Electric contact 90 is left open, when sealing device 30 is arranged in the second configuration.

Electric contact 92 is electrically connected to a positive pole of the power/current generator 99, when sealing device 30 is arranged in the second configuration (Figure 10). Electric contact 92 is left open, when sealing device 30 is arranged in the first configuration.

Electric contacts 94 and 90 or 92 are, in the embodiment shown, electrically connected to the power/current generator 99 by using conductive bars.

When sealing device 30 is in the first configuration (Figure 9), inductors 31, 32 define together with power/current generator 99 a closed electric circuit C1.

In particular, circuit C1 comprises serpentines 70, 71, 72, serpentines 81, 82 and U-shaped portion 83 (Figure 9).

When sealing device 30 is in the second configuration, portion 36 and L-shaped portion 73 of inductor 31 define a closed electric circuit C2 (Figure 10).

In particular, circuit C2 comprises L-shaped portion 73, serpentine 72 and bottom half 79 of serpentine 70.

As a matter of fact, serpentine 71 and top half 74 of serpentine 70 are no longer connected to the positive pole of power/current generator 99 and therefore no alternate current may flow therein.

In the very same way, inductor 32 is no longer electrically connected to the positive pole of power/current generator 99 and therefore no alternate current may flow therein.

When sealing device 30 is set in the first configuration, at a given time, the alternate current flows in the same direction along top half 74 of serpentine 70 and along serpentine 81. Current also flows in the same direction along serpentines 71, 82 (see Figures 11 and 12 where the arrows indicate the sense of the alternate magnetic fields generated by alternate current flowing in circuit C1 at a given time).

In this way, resulting magnetic flux M1 acting onto edge 15 at a given time is not null.

The operation of machine 1 is described starting from a condition in which sealing device 30 and support 29 are in the raised position (Figure 4).

Web 3 is unwound off reel 4 and fed along path P.

More specifically, web 3 is fed by guide members 5 along path P and through successive stations 6, 7, 8.

At station 6, edge 11 is heated, and portion 16 of strip 9 is applied to the face of edge 11 eventually facing inwards of packages 2. Once portion 16 is applied to edge 11, portion 17 projects from edge 11.

Next, web 3 interacts gradually with forming assemblies 13, and is folded to superimpose edges 11, 15 and form tube 10 not yet sealed longitudinally.

More specifically, forming assemblies 13 fold web 3 so that strip 9 is located inside the as yet unsealed tube 10, edge 15 is located radially outwards of edge 11 and portion 17 with respect to the axis of tube 10 still to be sealed longitudinally, and edge 11 is located radially outwards of portion 16 of strip 9.

Seal 14 is formed, in station 8, by sealing to the inner face of edge 15 portion 17 of strip 9 and the face of edge 11 on the opposite side to portion 16.

More precisely, sealing device 30 heats edge 15 to melt the polyethylene layer; heat is transmitted by conduction from edge 15 to edge 11 and strip 9 to melt the polyethylene layer of edge 11 and the heat-seal material of strip 9.

In detail, edge 15 enters passage 28 and remains detached from edge 11 as it travels between inductor 32 and portion 35 of inductor 31.

Edge 15 overlaps edge 11 and strip 9, as it travels in front of portion 36 of inductor 31.

Sealing device 30 is arranged in the first configuration, during the normal operation of machine 1.

In detail, electrical contact 94 is electrically connected to the negative pole of generator 99 and electrical contact 90 is electrically connected to the positive pole of generator 99 (Figure 9).

As a result, closed circuit C1 is formed within inductors 31, 32 and alternate current flows therein.

The alternate current flowing in circuit C1 generates magnetic flux M1 (directed substantially orthogonally to path P) and magnetic flux M2 (directed substantially transversal to path P).

More precisely, magnetic flux M1 is generated by alternate current flowing within portion 35 of inductor 31 and within inductor 32. Magnetic flux M2 is generated by alternate current flowing within portion 36 of inductor 31.

Magnetic flux M1 generates eddy current in the packaging material of edge 15. This eddy current results, in turn, in the heating of edge 15.

In the same way, magnetic flux M2 generates eddy current in the packaging material of edges 15, 11 and strip 9 overlapped onto each other. This eddy current results, in turn, in the heating of edges 15, 11 and of strip 9.

In detail, leg 200 of portion 36 of inductor 31 induces portion 300 of eddy currents within area 202 to be sealed of edges 11, 15 and strip 9; leg 201 of portion 36 of inductor 31 induces portion 301 of eddy currents within area 202 to be sealed of edges 11, 15 and strip 9.

As a result, substantially the whole eddy current induced by portion 36 of inductor 31 circulates within area 202 (Figure 15).

Next, tube 10 is fed through the circular passage defined by rollers 21, 22. Edges 11, 15 and strip 9 are compressed between rollers 21, 22 to blend the polyethylene layer of edges 11, 15 and the heat-seal material of strip 9, and so form the molecular bonds defining seal 14 of the finished tube 10.

In case that the operation of machine 1 is interrupted, there is a region of edge 15 which has been heated by sealing device 30 but not yet pressed by rollers 21,22.

This region is the one that is arranged within passage 28.

In order to ensure that this region is completely sealed to edge 11, sealing device 30 is lowered together with support 29 of rollers 21, 22 into the lowered position (Figure 5), when tube 10 is not advanced along path P.

At this stage, sealing device 30 is arranged in the second configuration (Figure 10).

More precisely, electric contact 92, 94 are electrically connected respectively to the positive and negative poles of power/current generator 99.

In this way, alternate current flows in the closed electric circuit C2 while no alternate current flows in serpentine 71, in top half 74 of serpentine 70 and in inductor 32.

In this condition, portion 36 of inductor 31 generates magnetic flux M2; and portion 35 of inductor 31 and inductor 32 do not generate magnetic flux M1 while portion 36 of inductor 31 generates the magnetic flux M2.

When tube 10 is advanced again, the previously un-sealed region of edge 15 is not heated again by portion 35 of inductor 31 and by inductor 32, but it is only pressed by rollers 21, 22.

In this way, this region of edge 15 is sealed to edge 11 and to portion 16 of strip 9 substantially without any risk to be damaged by a repeated heating.

Subsequently, sealing device 30 is moved together with support 29 into the raised position.

The longitudinally sealed tube 10 is filled continuously with the pourable food product by device 12, and is then fed through the jaw-type forming assembly (not shown) where it is gripped, sealed, and cut along equally spaced cross sections to form a succession of packages 2.

The advantages of sealing device 30 according to the present invention will be clear from the foregoing description.

In particular, inductors 31, 32 are configured to generate magnetic flux M1 transversally to path P, when sealing device 30 is in the first configuration.

As a result, magnetic flux M1 generated by inductors 31, 32 reaches at edges 15, 11 higher values than the ones reached in the prior art solution described in the introductory part of the present invention.

Accordingly, the efficiency of the sealing device 30 is highly improved when compared with the previously known sealing device.

Furthermore, as evident from Figure 12, the constant-value lines of the magnetic field generating magnetic flux M1 are symmetrical relative to the packaging material of edges 15, 11.

As a result, the efficiency of sealing is not penalized by the movement of the packaging material transversally to path P.

Sealing device 30 is also particularly advantageous in case that the operation of machine 1 stops, thus leaving a region of edges 15 heated by sealing device 30 but not pressed by rollers 21, 22.

As a matter of fact, in this case, sealing device 30 is moved together with support 29 in the lowered position and is therefore arranged in the second configuration.

Due to the fact that portion 36 of inductor 31 can be excited independently from portion 35 of inductor 31 and from inductor 32 when sealing device 30 is in the second configuration, the previously heated but not-pressed region of edges 15 is not heated again. In this way, power/current source 99 no longer needs to be adjusted in order to avoid that the region is damaged by overheating.

Furthermore, inductors 31, 32 comprise respective serpentines 70, 71, 72 and 81, 82.

The Applicant has found that serpentines 70, 71, 72; 81, 82 highly improve the uniformity of the heat pattern and of the resulting seal 14.

In particular, serpentines 70, 71, 72; 81, 82 prevent the formation of a nodal line in the eddy current generated in edge 15 and the consequent formation of a cold channel in edge 15. This effect is mainly due to the fact that heat pattern generated by stretches 101, 102 of serpentines 70, 71, 72; 81, 82 overlap each other at edge 15. As a result, the uniformity of seal 14 is highly enhanced.

Support 44, 45 and inductors 31, 32 form a printed circuit board. This allows manufacturing inductors 31, 32 shaped in very different way with a reduced impact on manufacturing cost.

Clearly, changes may be made to sealing device 30 as described and illustrated herein without, however, departing from the scope of the present invention as defined in the accompanying Claims.

Sealing device 30, in particular, may also be used in station 6 for sealing portion 16 of strip 9 to the face of edge 11 eventually facing inwards of packages 2.

## Claims

1. A heating induction sealing device (30) for forming a seal (14) in a packaging material (15, 11, 9) comprising an electrically conductive element and advancing along a direction (A);
said sealing device (30) comprising at least one first inductive element (31) and being **characterized by** comprising:
- at least one second inductive element (32);
said first inductive element (31) comprising:
- a first portion (35) facing said second inductive element (32) and defining with said second inductive element (32) a passage (28) for said packaging material (15, 11, 9); and
- a second portion (36);
said sealing device (30) being selectively arrangeable in a first configuration, in which alternate currents flow within said first and second inductive element (31, 32);
said first portion (35) and second inductive element (32) being configured to generate, in use, a first magnetic flux (M1) transversally to said direction (A), when said sealing device (30) is arranged in said first configuration; the constant-value lines of said first magnetic flux (M1) being symmetrical, in use, relative to said packaging material (15, 11, 9);
said second portion (36) being configured to generate, in use, a second magnetic flux (M2) with a main component transversal to said direction (A), when said sealing device (30) is arranged in said first configuration.

2. The sealing device of claim 1, **characterized in that** said first portion (35) of said first inductive element (31) comprises a first and a second leg (74, 71), and **in that** said second inductive element (32) comprises a third and fourth leg (81, 82);
said first and third leg (74, 81) being arranged, in use, on opposite sides of said passage (28);
said second and fourth leg (71, 82) being arranged, in use, on opposite sides of said passage (28);
said first leg (74) and said third leg (81) being arranged on the same side of said second and fourth leg (71, 82) respectively;
the alternate current flowing, in use, in the same direction in said first and third leg (74, 81), and in said second and fourth leg (71, 82) at a given time, when said sealing device (30) is arranged in said first configuration.

3. The induction sealing device of claims 1 or 2, **characterized in that** it may be selectively arranged in a second configuration in which alternate current flows within said second portion (36) of said first inductive element (31) and no alternate current flows within said second inductive element (32) and said first portion (35) of said first inductive element (31);
said second portion (36) being configured to generate said second magnetic flux (M2), when said sealing device (30) is arranged in said second configuration.

4. The induction sealing device of claim 3, **characterized in that** said second inductive element (32) comprises a first and a second electric contacts (90, 91); and **in that** said first inductive element (31) comprises a third, a fourth and a fifth electric contacts (92, 93, 94);
said second and fourth electric contacts (91, 93) being electrically connected to each other;
said fifth electric contact (94) being electrically connected to a first pole of a power/current source (99);
one between said first or said third electric contact (90, 92) being electrically connected to a second pole of said power/current source (99), when said sealing device (30) is respectively arranged in said first or second configuration;
said first and fifth electric contacts (90, 94) defining together with said power/current source (99) a first closed electrical circuit (C1) within both first and second portions (35, 36) of said first inductive element (31) and said second inductive element (32), when said sealing device (30) is arranged in said first configuration;
said third and fifth electric contacts (92, 94) defining together with said power/current source (99) a second closed electrical circuit (C2) within said second portion (36) of said second inductive element (32), when said sealing device (30) is arranged in said second configuration.

5. The sealing device of any one of the foregoing claims, **characterized by** comprising a first body (40) housing said first inductive element (31) and a second body (41) housing said second inductive element (32);
said first and second body (40, 41) defining therebetween said passage (28).

6. The sealing device of claim 5, **characterized in that** said first and second body (40, 41) extend along respective axes (B); at least one between said first and second inductive element (31, 32) being shaped at least in part as a serpentine (70, 71, 72, 81, 82);
said serpentine (70, 71, 72, 81, 82) being elongated along said respective axis (B) parallel, in use, to said direction and extending at varying distances from said respective axis (B).

7. The sealing device of claim 6, **characterized in that** said serpentine (70, 71, 72, 81, 82) comprises a plurality of repeated modules (100) identical and adjacent to each other.

8. The sealing device of claim 7, **characterized in that** each module (100) comprises:
- a first and a second rectilinear stretch (101, 102) which extend at relative different distances from said respective axis (B); and
- at least a curved stretch (103) interposed between said first and second stretch (101, 102).

9. The sealing device of any one of the foregoing claims, **characterized by** comprising a pair of supports (44, 45) supporting at least one between said first and second inductive element (31, 32) and forming a printed circuit board together with said at least one between said first and second inductive element (31, 32).

10. A packaging machine (1) for manufacturing sealed package (2) of a food product pourable into a tube (10) of packaging material, comprising:
- sealing means (30) for applying a strip (9) of a packaging material onto a first edge (11) of said tube (10) and/or for applying a second edge (15) of said tube (10) onto said first edge (11); and
- pressure means (21, 22) for exerting a pressure onto said first and second edges (11, 15) overlapping each other;
**characterized in that** said sealing means (30) comprise a sealing device (30) according to any one of the foregoing claims.

11. A method of forming a seal (14) in a packaging material comprising an electrically conductive material and advancing along a direction (A), **characterized by** comprising the steps of:
- interposing said packaging material (15, 11, 9) to be sealed within a passage (28) defined between a first and a second inductive element (31, 32);
- causing alternate current to flow within said first and second inductive element (31, 32);
- generating a first magnetic flux (M1) transversally to said first direction (A) by using alternate current flowing within a first portion (35) of said first inductive element (31) and said second inductive element (32); said first portion (35) facing said second inductive element (32) and defining said passage (28) with said second inductive element (32); the constant-value lines of said first magnetic flux (M1) being symmetrical, in use, relative to said packaging material (15, 11, 9); and
- generating a second magnetic flux (M2) having a main component transversal to said direction (A) by using alternate current flowing within a second portion (36) of said first inductive element (31).

12. The method of claim 11, **characterized by** comprising the steps of subsequently:
- advancing said packaging material (15, 11, 9) along a path (P) parallel to said direction (A) and relative to said first and second inductive elements (31, 32);
- heating said packaging material (15, 11, 9) by eddy current induced by said first and second inductive elements (31, 32);
- compressing said packaging material (15, 11, 9) so as to complete the formation of said seal (14), by using pressure means (21, 22);
- arresting said packaging material and interrupting the formation of said seal (14), thus leaving a heated region of said packaging material (15, 11, 9) not completely sealed;
- moving said first and second inductive elements (31, 32) relative to said packaging material (15, 11, 9) in the advancing direction of said packaging material (15, 11, 9);
- advancing again said packaging material (15, 11, 9); and
- heating again and compressing said region;
**characterized by** comprising, during said step of heating again and compressing said region, the steps of:
- preventing alternate current from flowing within said second inductive element (32) and within said first portion (35) of said first inductive element (31), so as to prevent the generation of said first magnetic flux (M1);
- causing alternate current to flow within said second portion (36) only of said first inductive element (31), so as to generate said second magnetic flux (M2) only.

13. The method of claim 11 or 12, comprising the steps of:
- feeding a tube (10) of said packaging material; and
- sealing a first and a second edge (11, 15) of said tube (10) along said direction (A);
**characterized in that** said step of sealing comprises the steps of:
- arranging said first inductive element (31) on the external side of said tube (10);
- arranging said second inductive element (32) inside said tube (10); and
- inserting said first edge (15) within said passage (28).

## Patentansprüche

1. Vorrichtung zur Versiegelung durch Induktionserwärmung (30) zum Formen einer Versiegelung (14) in einem Verpackungsmaterial (15, 11, 9), das ein elektrisch leitendes Element enthält und sich entlang einer Richtung (A) vorwärts bewegt;
wobei die Versiegelungsvorrichtung (30) mindestens ein erstes induktives Element (31) enthält und **dadurch gekennzeichnet ist, dass** sie enthält:
- mindestens ein zweites induktives Element (32);
wobei das erste induktive Element (31) enthält:
- einen ersten Teil (35), der dem zweiten induktiven Element (32) gegenüber liegt und mit dem zweiten induktiven Element (32) einen Durchgang (28) für das Verpackungsmaterial (15, 11, 9) definiert; und
- einen zweiten Teil (36);
wobei die Versiegelungsvorrichtung (30) selektiv in einer ersten Konfiguration angeordnet werden kann, in der Wechselströme im ersten und im zweiten induktiven Element (31, 32) fließen;
wobei der erste Teil (35) und das zweite induktive Element (32) konfiguriert sind, um im Betrieb einen ersten Magnetfluss (M1) quer zur Richtung (A) zu erzeugen, wenn die Versiegelungsvorrichtung (30) in der ersten Konfiguration angeordnet ist; wobei die Konstantwert-Linien des ersten Magnetflusses (M1) im Betrieb bezüglich des Verpackungsmaterials (15, 11, 9) symmetrisch sind; wobei der zweite Teil (36) konfiguriert ist, um im Betrieb einen zweiten Magnetfluss (M2) mit einer Hauptkomponente quer zur Richtung (A) zu erzeugen, wenn die Versiegelungsvorrichtung (30) in der ersten Konfiguration angeordnet ist.

2. Versiegelungsvorrichtung nach Anspruch 1, **dadurch gekennzeichnet, dass** der erste Teil (35) des ersten induktiven Elements (31) einen ersten und einen zweiten Schenkel (74, 71) enthält, und dass das zweite induktive Element (32) einen dritten und einen vierten Schenkel (81, 82) enthält; wobei der erste und der dritte Schenkel (74, 81) im Betrieb auf gegenüber liegenden Seiten des Durchgangs (28) angeordnet sind;
wobei der zweite und der vierte Schenkel (71, 82) im Betrieb auf gegenüber liegenden Seiten des Durchgangs (28) angeordnet sind;
wobei der erste Schenkel (74) und der dritte Schenkel (81) auf der gleichen Seite des zweiten bzw. des vierten Schenkels (71, 82) angeordnet sind; wobei der Wechselstrom im Betrieb zu einem gegebenen Zeitpunkt im ersten und im dritten Schenkel (74, 81) und im zweiten und im vierten Schenkel (71, 82) in der gleichen Richtung fließt, wenn die Versiegelungsvorrichtung (30) in der ersten Konfiguration angeordnet ist.

3. Induktionsversiegelungsvorrichtung nach den Ansprüchen 1 oder 2, **dadurch gekennzeichnet, dass** sie selektiv in einer zweiten Konfiguration angeordnet werden kann, in der Wechselstrom im zweiten Teil (36) des ersten induktiven Elements (31) fließt und kein Wechselstrom im zweiten induktiven Element (32) und im ersten Teil (35) des ersten induktiven Elements (31) fließt; wobei der zweite Teil (36) konfiguriert ist, um den zweiten Magnetfluss (M2) zu erzeugen, wenn die Versiegelungsvorrichtung (30) in der zweiten Konfiguration angeordnet ist.

4. Induktionsversiegelungsvorrichtung nach Anspruch 3, **dadurch gekennzeichnet, dass** das zweite induktive Element (32) einen ersten und einen zweiten elektrischen Kontakt (90, 91) enthält; und dass das erste induktive Element (31) einen dritten, einen vierten und einen fünften elektrischen Kontakt (92, 93, 94) enthält;
wobei der zweite und der vierte elektrische Kontakt (91, 93) elektrisch miteinander verbunden sind;
wobei der fünfte elektrische Kontakt (94) elektrisch mit einem ersten Pol einer Leistungs-/Stromquelle (99) verbunden ist;
wobei einer der ersten oder dritten elektrischen Kontakte (90, 92) elektrisch mit einem zweiten Pol der Leistungs-/Stromquelle (99) verbunden ist, wenn die Versiegelungsvorrichtung (30) in der ersten bzw. der zweiten Konfiguration angeordnet ist;
wobei der erste und der fünfte elektrische Kontakt (90, 94) zusammen mit der Leistungs-/Stromquelle (99) einen ersten geschlossenen elektrischen Schaltkreis (C1) innerhalb der beiden ersten und zweiten Teile (35, 36) des ersten induktiven Elements (31) und des zweiten induktiven Elements (32) definieren, wenn die Versiegelungsvorrichtung (30) in der ersten Konfiguration angeordnet ist;
wobei der dritte und der fünfte elektrische Kontakt (92, 94) zusammen mit der Leistungs-/Stromquelle (99) einen zweiten geschlossenen elektrischen Schaltkreis (C2) innerhalb des zweiten Teils (36) des zweiten induktiven Elements (32) definieren, wenn die Versiegelungsvorrichtung (30) in der zweiten Konfiguration angeordnet ist.

5. Versiegelungsvorrichtung nach einem der vorhergehenden Ansprüche,
**dadurch gekennzeichnet, dass** sie einen ersten Körper (40), der das erste induktive Element (31) aufnimmt, und einen zweiten Körper (41) enthält, der das zweite induktive Element (32) aufnimmt;
wobei der erste und der zweite Körper (40, 41) zwischen sich den Durchgang (28) definieren.

6. Versiegelungsvorrichtung nach Anspruch 5, **dadurch gekennzeichnet, dass** der erste und der zweite Körper (40, 41) sich entlang von Achsen (B) erstrecken; wobei mindestens eines des ersten und zweiten induktiven Elemente (31, 32) zumindest zum Teil die Form einer Serpentine (70, 71, 72, 81, 82) hat;
wobei die Serpentine (70, 71, 72, 81, 82) im Betrieb entlang der Achse (B) parallel zu der Richtung längs verläuft und sich in unterschiedlichen Abständen von der Achse (B) erstreckt.

7. Versiegelungsvorrichtung nach Anspruch 6, **dadurch gekennzeichnet, dass** die Serpentine (70, 71, 72, 81, 82) eine Vielzahl wiederholter Module (100) enthält, die gleich und einander benachbart sind.

8. Versiegelungsvorrichtung nach Anspruch 7, **dadurch gekennzeichnet, dass** jedes Modul (100) enthält:
- eine erste und eine zweite geradlinige Strecke (101, 102), die sich in unterschiedlichen Abständen zur Achse (B) erstrecken; und
- mindestens eine gekrümmte Strecke (103), die zwischen die erste und die zweite Strecke (101, 102) eingefügt ist.

9. Versiegelungsvorrichtung nach einem der vorhergehenden Ansprüche,
**dadurch gekennzeichnet, dass** sie ein Paar von Trägern (44, 45) enthält, die mindestens eines der ersten und zweiten induktiven Elemente (31, 32) tragen und mit dem mindestens einen der ersten und zweiten induktiven Elemente (31, 32) eine Leiterplatte formen.

10. Verpackungsmaschine (1) zur Herstellung einer versiegelten Verpackung (2) eines in einen Schlauch (10) von Verpackungsmaterial gießbaren Nahrungsmittels, die enthält:
- eine Versiegelungseinrichtung (30) zum Aufbringen eines Streifens (9) eines Verpackungsmaterials auf eine erste Kante (11) des Schlauchs {10) und/oder zum Aufbringen einer zweiten Kante (15) des Schlauchs (10) auf die erste Kante (11); und
- eine Druckeinrichtung (21, 22) zum Ausüben eines Drucks auf die einander überlappenden ersten und zweiten Kanten (11, 15);
**dadurch gekennzeichnet, dass** die Versiegelungseinrichtung (30) eine Versiegelungsvorrichtung (30) nach einem der vorhergehenden Ansprüche enthält.

11. Verfahren zum Formen einer Versiegelung (14) in einem Verpackungsmaterial, das ein elektrisch leitendes Material und einen Vorschub entlang einer Richtung (A) enthält, **dadurch gekennzeichnet, dass** es die folgenden Schritte enthält:
- Einfügen des zu versiegelnden Verpackungsmaterials (15, 11, 9) in einen Durchgang (28), der zwischen einem ersten und einem zweiten induktiven Element (31, 32) definiert ist;
- Veranlassen des Fließens von Wechselstrom im ersten und im zweiten induktiven Element (31, 32);
- Erzeugen eines ersten Magnetflusses (M1) quer zur ersten Richtung (A) durch Verwenden des in einem ersten Teil (35) des ersten induktiven Elements (31) und dem zweiten induktiven Element (32) fließenden Wechselstroms; wobei der erste Teil (35) dem zweiten induktiven Element (32) gegenüber liegt und mit dem zweiten induktiven Element (32) den Durchgang (28) definiert; wobei die Konstantwert-Linien des ersten Magnetflusses (M1) im Betrieb symmetrisch bezüglich des Verpackungsmaterials (15, 11, 9) sind; und
- Erzeugen eines zweiten Magnetflusses (M2) mit einer Hauptkomponente quer zur Richtung (A) durch Verwendung des in einem zweiten Teil (36) des ersten induktiven Elements (31) fließenden Wechselstroms.

12. Verfahren nach Anspruch 11, **dadurch gekennzeichnet, dass** es die aufeinanderfolgenden Schritte enthält:
- Vorschub des Verpackungsmaterials (15, 11, 9) entlang eines Pfads (P) parallel zur Richtung (A) und bezüglich des ersten und des zweiten induktiven Elements (31, 32);
- Erwärmen des Verpackungsmaterials (15, 11, 9) durch Wirbelstrom, der vom ersten und vom zweiten induktiven Element (31, 32) induziert wird;
- Komprimieren des Verpackungsmaterials (15, 11, 9), um das Formen der Versiegelung (14) zu vervollständigen, durch Verwendung einer Druckeinrichtung(21, 22);
- Anhalten des Verpackungsmaterials und Unterbrechen des Formens der Versiegelung (14), wodurch ein erwärmter Bereich des Verpackungsmaterials (15, 11, 9) nicht vollständig versiegelt gelassen wird;
- Bewegen des ersten und des zweiten induktiven Elements (31, 32) bezüglich des Verpackungsmaterials (15, 11, 9) in der Vorschubrichtung des Verpackungsmaterials (15, 11, 9);
- erneuter Vorschub des Verpackungsmaterials (15, 11, 9); und
- Wiedererwärmen und Komprimieren des Bereichs;
**dadurch gekennzeichnet, dass** es während des Schritts des Wiedererwärmens und Komprimierens des Bereichs die folgenden Schritte enthält:
- Verhindern des Fließens von Wechselstrom im zweiten induktiven Element (32) und im ersten Teil (35) des ersten induktiven Elements (31), um die Erzeugung des ersten Magnetflusses (M1) zu verhindern;
- Veranlassen des Fließens von Wechselstrom im zweiten Teil (36) nur des ersten induktiven Elements (31), um nur den zweiten Magnetfluss (M2) zu erzeugen.

13. Verfahren nach Anspruch 11 oder 12, das die folgenden Schritte enthält:
- Zufuhr eines Schlauchs (10) des Verpackungsmaterials; und
- Versiegeln einer ersten und einer zweiten Kante (11, 15) des Schlauchs (10) entlang der Richtung (A);
**dadurch gekennzeichnet, dass** der Versiegelungsschritt die folgenden Schritte enthält:
- Anordnen des ersten induktiven Elements (31) auf der Außenseite des Schlauchs (10);
- Anordnen des zweiten induktiven Elements (32) innerhalb des Schlauchs (10); und
- Einführen der ersten Kante (15) in den Durchgang (28).

## Revendications

1. Dispositif de soudage par chauffage à induction (30) destiné à former une soudure (14) sur un matériau de conditionnement (15, 11, 9) comprenant un élément électriquement conducteur et se déplaçant suivant une direction (A) ;
ledit dispositif de soudage (30) comprenant au moins un premier élément d'induction (31) et étant **caractérisé par le fait qu'**il comprend :
au moins un second élément d'induction (32) ;
ledit premier élément d'induction (31) comprenant :
une première partie (35) faisant face audit second élément d'induction (32) et définissant, avec ledit second élément d'induction (32), un passage (28) pour ledit matériau de conditionnement (15, 11, 9) ; et
une seconde partie (36) ;
ledit dispositif de soudage (30) pouvant être agencé de manière sélective suivant une première configuration, dans laquelle des courants alternatifs circulent à l'intérieur desdits premier et second éléments d'induction (31, 32) ;
ladite première partie (35) et ledit second élément d'induction (32) étant configurés de manière à produire, en utilisation, un premier flux magnétique (M1) transversalement par rapport à ladite direction (A), lorsque ledit dispositif de soudage (30) est agencé dans ladite première configuration ; les lignes à flux constant dudit premier flux magnétique (M1) étant symétriques, en utilisation, par rapport audit matériau de conditionnement (15, 11,9);
ladite seconde partie (36) étant configurée de manière à produire, en utilisation, un second flux magnétique (M2) avec une composante principale transversale par rapport à ladite direction (A), lorsque ledit dispositif de soudage (30) est agencé dans ladite première configuration.

2. Dispositif de soudage selon la revendication 1, **caractérisé en ce que** ladite première partie (35) dudit premier élément d'induction (31) comprend une première et une seconde branches (74, 71), et **en ce que** ledit second élément d'induction (32) comprend des troisième et quatrième branches (81, 82) ;
lesdites première et troisième branches (74, 81) étant agencées, en utilisation, sur des côtés opposés dudit passage (28) ;
lesdites deuxième et quatrième branches (71, 82) étant agencées, en utilisation, sur des côtés opposés dudit passage (28) ;
ladite première branche (74) et ladite troisième branche (81) étant respectivement agencées du même côté que lesdites deuxième et quatrième branches (71, 82) ;
le courant alternatif circulant, en utilisation, dans le même sens sur lesdites première et troisième branches (74, 81), et sur lesdites deuxième et quatrième branches (71, 82), à un instant donné, lorsque ledit dispositif de soudage (30) est agencé dans ladite première configuration.

3. Dispositif de soudage à induction selon les revendications 1 ou 2, **caractérisé en ce qu'**il peut être agencé de manière sélective dans une seconde configuration dans laquelle un courant alternatif circule à l'intérieur de ladite seconde partie (36) dudit premier élément d'induction (31) et aucun courant alternatif ne circule à l'intérieur dudit second élément d'induction (32) et de ladite première partie (35) dudit premier élément d'induction (31) ;
ladite seconde partie (36) étant configurée de manière à produire ledit second flux magnétique (M2), lorsque ledit dispositif de soudage (30) est agencé dans ladite deuxième configuration.

4. Dispositif de soudage par chauffage à induction selon la revendication 3, **caractérisé en ce que** ledit second élément d'induction (32) comprend des premier et second contacts électriques (90, 91) ; et **en ce que** ledit premier élément d'induction (31) comprend des troisième, quatrième et cinquième contacts électriques (92, 93, 94) ;
lesdits deuxième et quatrième contacts électriques (91, 93) étant raccordés électriquement l'un à l'autre ;
ledit cinquième contact électrique (94) étant raccordé électriquement à un premier pôle d'une source de puissance/courant (99) ;
un parmi ledit premier ou ledit troisième contact électrique (90, 92) étant raccordé électriquement à un second pôle de ladite source de puissance/courant (99), lorsque ledit dispositif de soudage (30) est agencé respectivement dans ladite première ou deuxième configuration ;
lesdits premier et cinquième contacts électriques (90, 94) définissant ensemble avec ladite source de puissance/courant (99) un premier circuit électrique fermé (C1) à la fois à l'intérieur des première et seconde parties (35, 36) dudit premier élément d'induction (31) et dudit second élément d'induction (32), lorsque ledit dispositif de soudage (30) est agencé dans ladite première configuration ;
lesdits troisième et cinquième contacts électriques (92, 94) définissant ensemble avec ladite source de puissance/courant (99) un second circuit électrique fermé (C2) à l'intérieur de ladite seconde partie (36) dudit second élément d'induction (32), lorsque ledit dispositif de soudage (30) est agencé dans ladite seconde configuration.

5. Dispositif de soudage selon l'une quelconque des revendications précédentes, **caractérisé par le fait qu'**il comprend un premier corps (40) contenant ledit premier élément d'induction (31) et un second corps (41) contenant ledit second élément d'induction (32) ;
lesdits premier et second corps (40, 41) définissant entre eux ledit passage (28).

6. Dispositif de soudage selon la revendication 5, **caractérisé en ce que** lesdits premier et second corps (40, 41) s'étendent suivant des axes respectifs (B) ; au moins l'un parmi lesdits premier et second éléments d'induction (31, 32) étant au moins en partie réalisés sous une forme de serpentin (70, 71, 72, 81, 82) ;
ledit serpentin (70, 71, 72, 81, 82) étant allongé suivant ledit axe respectif (B) parallèle, en utilisation, à ladite direction et s'étendant à des distances variables par rapport audit axe respectif (B).

7. Dispositif de soudage de la revendication 6, **caractérisé en ce que** ledit serpentin (70, 71, 72, 81, 82) comprend une pluralité de modules répétitifs (100) identiques et adjacents les uns aux autres.

8. Dispositif de soudage selon la revendication 7, **caractérisé en ce que** chaque module (100) comprend :
des première et deuxième bandes rectilignes (101, 102) qui s'étendent à différentes distances relatives par rapport audit axe respectif (B) ; et
au moins une bande courbe (103) interposée entre lesdites première et deuxième bandes (101, 102).

9. Dispositif de soudage selon l'une quelconque des revendications précédentes, **caractérisé par le fait qu'**il comprend une paire de supports (44, 45) supportant au moins l'un parmi lesdits premier et second éléments d'induction (31, 32) et formant un circuit imprimé ensemble avec ledit au moins l'un parmi lesdits premier et second éléments d'induction (31, 32).

10. Machine de conditionnement (1) destinée à fabriquer un emballage scellé (2) d'un produit alimentaire fluide dans un tube (10) de matériau de conditionnement, comprenant :
des moyens de soudage (30) destinés à appliquer une bande (9) d'un matériau de conditionnement sur un premier bord (11) dudit tube (10) et/ou à appliquer un second bord (15) dudit tube (10) sur ledit premier bord (11) ; et
des moyens de pression (21, 22) destinés à exercer une pression sur lesdits premier et second bords (11, 15) se recouvrant l'un l'autre ;
**caractérisée en ce que** lesdits moyens de soudage (30) comprennent un dispositif de soudage (30) selon l'une quelconque des revendication précédentes.

11. Procédé de formation d'une soudure (14) sur un matériau de conditionnement comprenant un matériau électriquement conducteur et le déplacement suivant une direction (A), **caractérisé par le fait qu'**il comprend les étapes de :
interposition dudit matériau de conditionnement (15, 11, 9) à sceller à l'intérieur d'un passage (28) défini entre des premier et second éléments d'induction (31, 32) ;
application d'un courant alternatif à l'intérieur desdits premier et second éléments d'induction (31, 32) ;
production d'un premier flux magnétique (M1) transversalement par rapport à ladite première direction (A) en utilisant un courant alternatif circulant à l'intérieur d'une première partie (35) dudit premier élément d'induction (31) et dudit second élément d'induction (32) ; ladite première partie (35) faisant face audit second élément d'induction (32) et définissant ledit passage (28) avec ledit second élément d'induction (32) ; les lignes à flux constant dudit premier flux magnétique (M1) étant symétriques, en utilisation, par rapport audit matériau de conditionnement (15, 11, 9) ; et
production d'un second flux magnétique (M2) présentant une composante principale transversale par rapport à ladite direction (A) en utilisant un courant alternatif circulant à l'intérieur d'une seconde partie (36) dudit premier élément d'induction (31).

12. Procédé selon la revendication 11, **caractérisé par le fait qu'**il comprend les étapes consécutives :
de déplacement dudit matériau de conditionnement (15, 11, 9) suivant un trajet parallèle (P) à ladite direction (A) et par rapport auxdits premier et second éléments d'induction (31, 32) ;
de chauffage dudit matériau de conditionnement (15, 11, 9) par les courants de Foucault induits par lesdits premier et second éléments d'induction (31, 32) ;
de compression dudit matériau de conditionnement (15, 11, 9) de manière à achever la formation de ladite soudure (14), en utilisant un moyen de pression (21, 22) ;
d'arrêt dudit matériau de conditionnement et d'interruption de la formation de ladite soudure (14), laissant ainsi une zone chauffée dudit matériau de conditionnement (15, 11, 9) non entièrement scellée ;
de déplacement desdits premier et second éléments d'induction (31, 32) par rapport audit matériau de conditionnement (15, 11, 9) dans la direction de déplacement dudit matériau de conditionnement (15, 11, 9) ;
de déplacement, de nouveau, dudit matériau de conditionnement (15, 11, 9) ; et
de chauffage, de nouveau, et de compression de ladite zone ;
**caractérisé par le fait qu'**il comprend, au cours de ladite étape de chauffage, de nouveau, et de compression de ladite zone, les étapes de :
blocage du passage de courant alternatif à l'intérieur dudit second élément d'induction (32) et à l'intérieur de ladite première partie (35) dudit premier élément d'induction (31), de manière à empêcher la production dudit premier flux magnétique (M1) ;
application d'un courant alternatif uniquement à l'intérieur de ladite seconde partie (36) dudit premier élément d'induction (31), de manière à produire uniquement ledit second flux magnétique (M2).

13. Procédé selon la revendication 11 ou 12, comprenant les étapes de :
fourniture d'un tube (10) dudit matériau de conditionnement ; et
soudage de premier et second bords (11, 15) dudit tube (10) suivant ladite direction (A) ;
**caractérisé en ce que** ladite étape de soudage comprend les étapes de :
agencement dudit premier élément d'induction (31) du côté externe dudit tube (10) ;
agencement dudit second élément d'induction (32) à l'intérieur dudit tube (10) ; et
insertion dudit premier bord (15) à l'intérieur dudit passage (28).
